# EUROPEAN PATENT APPLICATION

(11) **EP 1 528 246 A2**
(43) Date of publication of application: **04.05.2005**
(21) Application number: 04025276.9
(22) Date of filing: 25.10.2004
(51) Int. Cl.: F02F 11/00, F16J 15/08

(54) **Cylinder head gasket**

(30) Priority: 30.10.2003 JP 2003370031
(71) Applicant: ISHIKAWA GASKET CO. LTD., Tokyo (JP)
(72) Inventor: Udagawa, Tsunekazu, Ichikawa-shi (JP)
(74) Representative: Banzer, Hans-Jörg, Dipl.-Ing.

(57) **Abstract**

A cylinder head gasket (1, 1A) is provided with a half bead (12) formed along a substantial external outline of a gasket around cylinder bores (2), water holes (3), and the like of the gasket. It is possible to enhance compression resistance of the half bead, thereby preventing creep and obtaining excellent sealing performance. The cylinder head gasket includes a plurality of holes (2, 3, 4) to be sealed, and a continuous half bead (12) formed around all or at least more than two of the holes to be sealed (2, 3 4). The continuous half bead (12) has at least one portion (14) formed in a waveform in a plan view.

## Description

### Background of the Invention and Related Art Statement

The present invention relates to a cylinder head gasket disposed between two engine members such as a cylinder head and a cylinder block of an internal combustion engine for sealing a combustion gas and the like.

When a joint surface of a cylinder head and a cylinder block (cylinder body) of an automobile engine is sealed, a metal cylinder head gasket is disposed between the cylinder head and the cylinder block for sealing a combustion gas, coolant water, or lubricating oil.

Because of demands for a lightweight engine and low production cost, the cylinder head gasket has been changed from a laminated type formed of a large number of laminated metal plates to a simple structure formed of one or two metal plates. Since the gasket is composed of one or two plates and materials to be used can be limited for reducing an engine weight, a type and the number of sealing means are limited as well. Accordingly, it is possible to use only relatively simple sealing means.

Therefore, in the cylinder head gasket for sealing placed between the cylinder head and the cylinder block of the automobile engine, a full bead in the form of a projection in cross section and a half bead in the form of a step (crank) in cross section have been mainly arranged adjacent to a hole to be sealed as the sealing means. Among them, the half bead has been used often for a gasoline engine having a small tightening force compared with a diesel engine. The half bead has a benefit of low production cost, and is easy to seal with a small tightening force.

Such a cylinder head gasket includes a laminate type metal gasket in which full bead are separately provided without connecting each other around cylinder bores (combustion chamber holes) arranged linearly; and a half bead is provided to surround all of the cylinder bores while extending along an outline of a gasket (for example, refer to Japanese Patent Publication (Kokai) No. 10-246153).

Also, there has been proposed a gasket in which a full bead with a projecting mountain shape in cross section is provided around a cylinder bore (cylinder opening); and a half bead with a step shape is provided outside and adjacent the full bead. Further, another half bead with a step shape is provided around a large number of coolant-water holes arranged around the cylinder bore hole outside the half bead (for example, refer to Japanese Patent Publication (Kokai) No. 08-61504).

Such an arrangement in which a half bead with an external outline shape of a gasket is provided around the cylinder bores, water holes, and oil holes has been frequently applied to an outer sealing portion of a cylinder head gasket for an open deck engine. The cylinder head gasket with such a half bead may include a straight portion in a plan view depending on a shape of the engine. It has been found that such a straight portion tends to have a problem such as a water leak or oil leak during an operation of the engine compared with a curved portion. This is because a strain (creep relaxation) of the gasket increases at the straight portion during the operation of the engine, thereby causing a local decrease in a sealing surface pressure.

Therefore, when the half bead has a straight portion in a plan view and the straight portion becomes long, the half bead has low resistance to compression force compared with the full bead, thereby making difficult to obtain sufficient sealing performance due to a strain (creep).

Also, a tightening pressure may differ with a distance from a bolt hole for fastening, and the outer half bead does not generate a uniform sealing surface pressure. Accordingly, there are a portion wherein a strain is easily generated and a portion wherein the strain is not easily generated. Along with reduction in an engine weight, engine components have lower rigidity, and the cylinder head repeatedly deforms in a greater extent during the engine operation. Accordingly, the outer half bead is pressed with a greater force, thereby causing a strain of the half bead.

On the other hand, the present inventor has proposed a cylinder head gasket in which a corrugated bead with a wave shape in a plan view is provided around a part of liquid holes for withstanding a high compression pressure and tightening pressure, and sealing extensively around the liquid holes (refer to Japanese Patent No. 3026084).

In view of the problems described above, the present invention has been made, and an object of the present invention is to provide a cylinder head gasket in which a half bead is formed along a substantial external outline of a gasket around a cylinder bore or a water hole. It is possible to enhance compression resistance at a straight portion of the half bead in a plan view for preventing a strain, thereby obtaining excellent sealing performance.

Further objects and advantages of the invention will be apparent from the following description of the invention.

### Summary of Invention

These objects are achieved by a cylinder head gasket according to claim 1. The dependent claims define preferred or advantageous embodiments of the present invention.

In order to achieve the objects described above, according to the present invention, a cylinder head gasket includes a plurality of holes to be sealed and a continuous half bead surrounding at least two or more of the holes. At least a portion of the half bead is formed in a wave shape in a plan view.

Alternatively, a cylinder head gasket includes a plurality of holes to be sealed and a continuous half bead surrounding all of the holes. At least a portion of the half bead is formed in a wave shape in a plan view.

In the cylinder head gasket described above, the wave shape is formed in an area inside a bolt hole. With this structure, a sealing line can be formed inside the bolt hole with the half bead, and it is not necessary to provide sealing means around the bolt hole.

According to the present invention, the wave pattern may be formed of a curved portion or a straight portion.

With this structure, the portion of the half bead with the wave shape in a plan view has an increased compression resistance and compression strength as compared with a half bead formed in a straight line in a plan view, thereby withstanding a strain and maintaining excellent sealing performance.

In other words, when a cylinder head moves up and down due to an explosion inside a cylinder during an operation of an engine, a load is repeatedly exerted on the gasket, and a step portion or a crank sectional portion of the half bead is shifted in a horizontal direction. As a result, a strain (creep) is generated at the straight portion of the half bead, thereby reducing a sealing surface pressure.

Therefore, in the present invention, the portion with the wave shape is provided instead of the conventional straight portion, so that the wave shape portion is not easily shifted in a horizontal direction when a load is repeatedly exerted. Accordingly, in a plan view of the half bead, the wave shape portion is provided at a portion where the straight portion is conventionally provided to increase compression resistance. Also, since the strain is reduced, it is possible to prevent a substantial decline in the sealing surface pressure with time, and maintain an appropriate sealing surface pressure.

As explained above, according to the present invention, the cylinder head gasket includes a plurality of holes to be sealed. The continuous half bead is provided at an area inside the bolt hole surrounding all or at least two or more of the holes to be sealed. At least a portion of the half bead is formed in the wave shape in a plan view. As a result, it is possible to increase the compression resistance and prevent the strain as compared with the half bead with the straight portion in a plan view, thereby obtaining excellent sealing performance.

### Brief Description of the Drawings

Fig. 1 is a plan view showing a cylinder head gasket with a half bead surrounding all holes to be sealed according to an embodiment of the present invention;
Fig. 2 is a partial sectional view showing an example of a cross sectional shape of a half bead;
Figs. 3(a) to 3(c) are plan views showing examples of shapes of the half bead according to the present invention, wherein Fig. 3(a) shows a sine waveform, Fig. 3(b) shows a continuous triangle shape, and Fig. 3(c) shows a continuous trapezoid shape;
Fig. 4 is a plan view of a cylinder head gasket showing an example of a half bead wherein a waveform with curved portions and a waveform with folded portions of straight lines are provided; and
Fig. 5 is a plan view showing the cylinder head gasket with conventional technology.

### Detailed Description of Preferred Embodiments

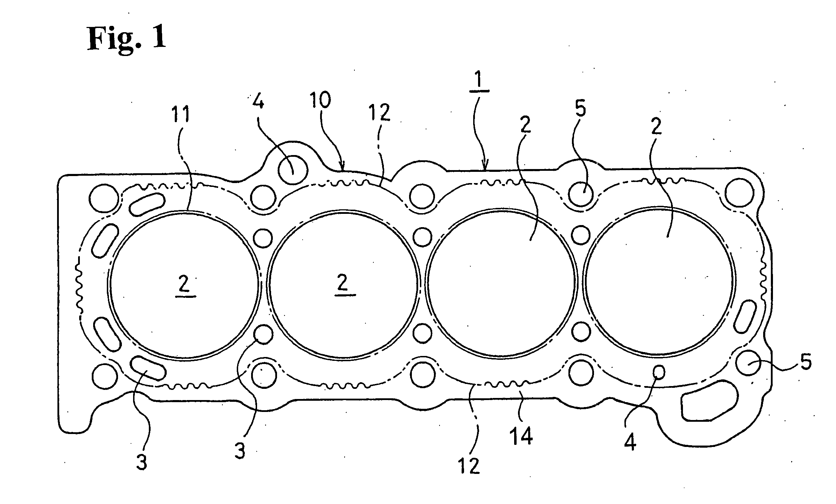

Hereunder, a cylinder head gasket according to embodiments of the present invention will be explained with reference to the drawings. Incidentally, Figs. 1 to 4 are explanatory schematic views, wherein a plate thickness, dimensions of a bead and a sealing groove, and a length-to-width ratio of the metal gasket are different from actual ones to exaggerate a sealing portion for easy understanding.

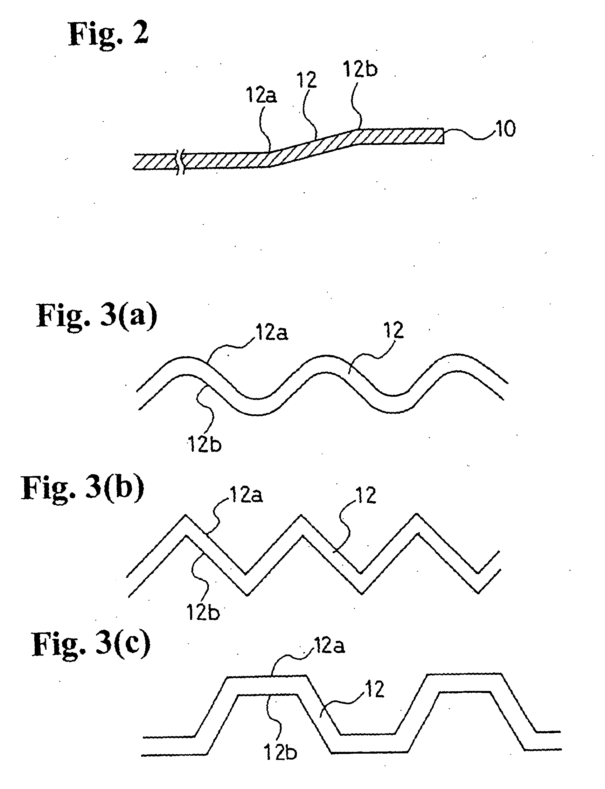

As shown in Figs. 1 and 2, according to the embodiment of the present invention, a cylinder head gasket 1 is disposed between a cylinder head and a cylinder block (cylinder body) of an engine for sealing a combustion gas with a high temperature and high pressure in cylinder bores, coolant water in a coolant-water passages, and oil in coolant-oil passages.

The cylinder head gasket 1 of the invention is composed of one metal plate 10 formed of an annealed stainless material (annealed material), a refined stainless material (spring steel plate), or a soft steel plate. The metal plate 10 is manufactured according to a shape of an engine member such as a cylinder block, and is provided with cylinder bores (combustion chamber holes) 2, water holes 3 for the coolant water, liquid holes 4 for engine-oil circulation, and bolt holes 5 for tightening bolts as shown in Fig. 1. Around the holes to be sealed such as the cylinder bores (combustion chamber holes) 2, water holes 3, and oil holes 4, sealing means such as a grommet, a full bead, or a shim is accordingly provided. In the embodiment, the sealing means is formed of a full bead 11.

In the present invention, a continuous half bead 12 surrounding substantially all of the holes 2, 3, 4 to be sealed is formed in an area inside the bolt holes 5. The half bead 12 includes wave portions 14 including curved portions in a plan view as shown in Fig. 1 for enhancing compression resistance. Also, the half bead 12 has a cross section having a step shape or a crank shape as shown in Fig. 2.

As shown in Figs. 3 (a) to 3 (c) , the wave pattern in a plan view includes a wave shape with curved portions or a wave shape with turned portions of a straight line. More specifically, a sine waveform shown in Fig. 3(a), a continuous triangle shape shown in Fig. 3(b) or a continuous trapezoid shown in Fig. 3(c) may be used. The waveform of the present invention is not limited to the shapes shown in Figs. 3(a), 3(b) and 3(c).

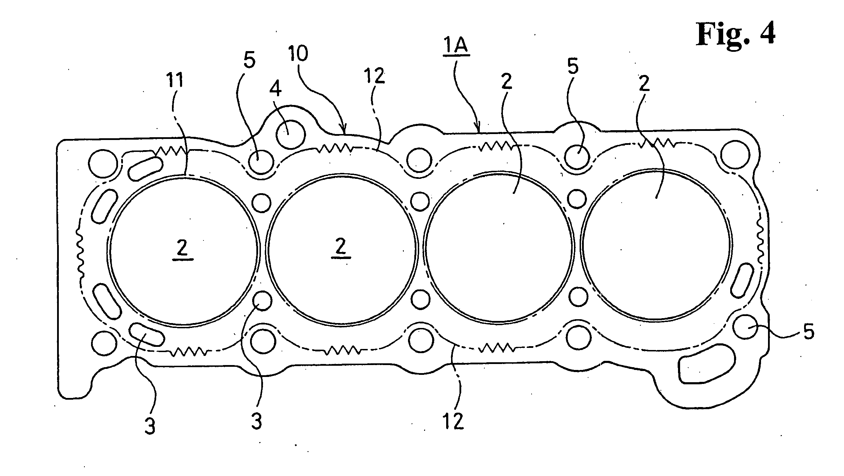

Moreover, as shown in Fig. 4, a cylinder head gasket 1A with a same shape may be provided with both a portion formed in a waveform with curved portions and a portion formed in a waveform with turned portions of a straight line.

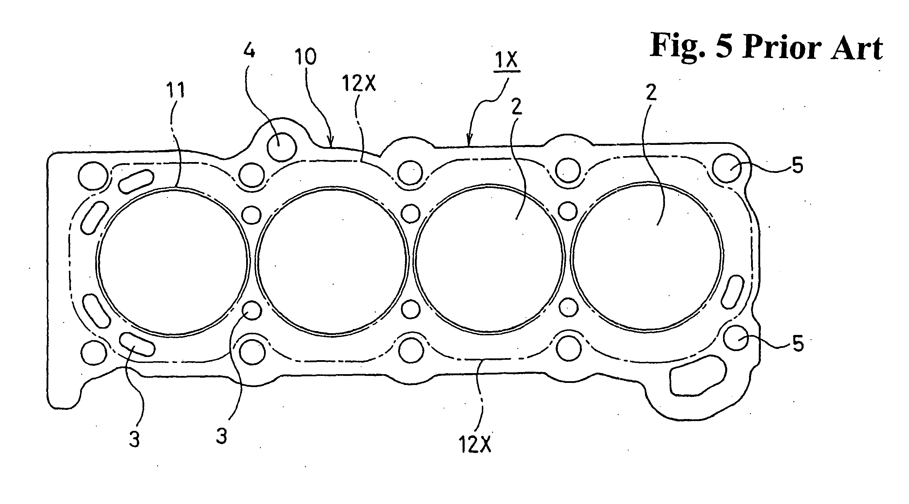

According to the cylinder head gaskets 1 and 1A wherein the half bead 12 is formed in the waveform in the plan view, the half bead 12 surrounding all (or at least more than two) of the holes 2, 3, 4 to be sealed is provided at a relatively wide area between the holes 2, 3, 4 to be sealed (the cylinder bores 2 and liquid holes 3 and 4), and the bolt holes 5. The half bead 12 is formed in the waveform in the plan view, so that it is possible to significantly enhance compression resistance as compared with a half bead 12X formed in straight lines in the plan view as shown in Fig. 5.

Moreover, by changing a pitch and size of the wave pattern, or a shape of the waveform in the plan view, it is possible to adjust an extent of enhancement of compression resistance, thereby obtaining compression resistance suitable for a location.

In the above explanation, the cylinder head gasket is formed of one sheet of the metal plate, and may have a structure of more than one metal plate combined with the metal plate.

## Claims

1. A cylinder head gasket (1, 1A) comprising:
a metal plate (10) having a plurality of holes (2, 3, 4) to be sealed, and
a continuous half bead (12) formed in the metal plate surrounding at least two of the holes to be sealed,
said cylinder head gasket (1, 1A) being **characterized in that** said continuous half bead (12) has at least one portion (14) formed in a waveform in plan.

2. A cylinder head gasket (1, 1A) according to claim 1, wherein said metal plate (10) further includes cylinder bores (2) and water holes (3), said continuous half bead (12) extending along an outer periphery of the metal plate and surrounding the cylinder bores and water holes formed in the metal plate.

3. A cylinder head gasket (1, 1A) according to claim 1 or 2, wherein said metal plate (10) further includes bolt holes (5), said continuous half bead being arranged inside the bolt holes.

4. A cylinder head gasket (1, 1A) according to claim 3, wherein said wave form (14) is formed at a portion between two bolt holes (5) adjacent to each other.

5. A cylinder head gasket (1, 1A) according to any one of claims 1 to 4, wherein said waveform (14) is formed of curved portions.

6. A cylinder head gasket (1, 1A) according to any one of claims 1 to 4, wherein said waveform (14) is formed of straight portions in a zigzag form.
